# EUROPEAN PATENT SPECIFICATION

(11) **EP 3 009 693 B1**
(45) Date of publication and mention of the grant of the patent: **16.05.2018**
(21) Application number: 15189308.8
(22) Date of filing: 12.10.2015
(51) Int. Cl.: F16B 12/20

(54) **FIXING SYSTEM FOR ONE GROOVE-SHAPED CROSSPIECE TO A PIECE OF FURNITURE**
BEFESTIGUNGSSYSTEM FÜR EIN QUERMÖBELSTÜCK ZU EINEM MÖBELSTÜCK
SYTEME DE FIXATION POUR UNE PIECE TRANVERSE RAINUREE A UNE PIECE DE MEUBLE

(30) Priority: 13.10.2014 IT VR20140243
(43) Date of publication of application: 20.04.2016
(73) Proprietor: SCILM S.p.A., 35013 Cittadella (Prov.Of Padova) (IT)
(72) Inventor: SCUDIERO, Paolo, 35010 S. Giorgio in Bosco (Padova) (IT)
(74) Representative: Anselmi, Davide

(56) References cited:
- DE-A1-102008 048 182
- FR-A5- 2 098 820

## Description

This invention relates to a system for fixing a groove-shaped crosspiece to a gap of a piece of furniture, which allows an easier assembly relative to prior art systems.

Currently, doors or drawers without handles are frequently used in pieces of furniture, and the movement is allowed by the structure of the door or drawer itself.

More specifically, many configurations require that the user pulls the door or drawer at the upper, lower or lateral edge, and therefore applies a force on the surface which is behind the door or drawer itself. This system makes the presence of an opening or gap in the structure of the piece of furniture necessary, in order to leave the space required for positioning the hand of the user.

The opening made in the piece of furniture, which for example could be interposed between the upper wall of the piece of furniture and the ledge of the drawer, must therefore be covered, in order to guarantee closing of the structure of the cupboard or of the drawer, as well as for aesthetic reasons. For this purpose, groove-shaped crosspieces are used, which define a concavity designed to follow on one side the profile of the gap of the piece of furniture and the other side that of the space to be left for the movement of the door or drawer.

The crosspiece is usually connected to the piece of furniture from the inside, by a support fixed to a side wall of the piece of furniture and in the proximity of the gap, to which a fixing device commonly called a runner is forcibly coupled, which is in turn slidably coupled to a guide which is integral with the crosspiece (the guide is usually defined by a socket made along the crosspiece).

FR 2 098 820 discloses a system for fixing a groove-shaped crosspiece to a piece of furniture. This system may have drawbacks for the assembly technician who must insert the runner before positioning the crosspiece. In effect, the runner comprises a bracket which is positioned inside the guide of the crosspiece having a width greater than that of the opening of the guide (measured perpendicularly to the direction of longitudinal extension of the crosspiece).

Therefore, it is necessary to insert the runner in the guide at an end of the crosspiece where the guide is open.

The assembly technician must therefore decide beforehand how many runners to insert and where to position them, even if it is only necessary to decide whether to position them on one side or the other of a same wall.

It should be noted that the single runner cannot be mounted on the relative portion of the crosspiece when the portion is already positioned between two walls. In effect, the crosspiece has entrance openings only at its lateral ends where the guide terminates (and is open). For this reason, each runner must be inserted along an entrance opening and made to slide laterally along the direction of extension of the guide.

Thus, each runner must be positioned correctly before the entire crosspiece is positioned on the gaps of the piece of furniture.

This may result in a certain waste of time by the assembly technician, and if the assembly technician makes a mistake, or the runner moves excessively during the operation for positioning the crosspiece, the assembly technician would have to remove the crosspiece to reposition the runner along the guide.

The same drawback would occur if the assembly technician forgot to insert one or more runners, and it were therefore necessary to insert the missing ones.

The aim of this invention is to provide a system for fixing a groove-shaped crosspiece to at least one gap of a piece of furniture which allows an easier assembly relative to the prior art systems, allowing the runner to be assembled even after the crosspiece is already positioned in the gap.

This aim is achieved by a system for fixing at least one groove-shaped crosspiece to at least one gap of a piece of furniture by forced coupling according to claim 1. A possible embodiment of the invention may have at least one of the following aspects.

Preferably, the bracket is fixed to a supporting element which has a size and shape such that it allows the passage of the runner from the first to the second operating condition and vice versa, when the bracket is in the guide.

In this way, the runner can pass from the condition wherein it can be inserted in the guide to that in which it can slide in it and is prevented from escaping.

Preferably, the passage from the first to the second operating condition and vice versa occurs by means of a rotation of the bracket in the guide and about an axis orthogonal to an axis of extension of the guide.

Preferably, the supporting element is fixed on one side to the bracket and on the other side to a locking plate designed for locking to the support.

Preferably, the space between the bracket and the plate is such that it receives at least part of the support.

Preferably, the system comprises coupling means between the runner and the support.

In this way, the runner may position itself on the side opposite the support relative to the crosspiece, to be able to remain locked to the support by means of the contact between the latter and the locking plate, and therefore keep the crosspiece adjacent to the support and therefore alongside the gap of the piece of furniture.

Preferably, the coupling means comprise projections and/or cavities fixed to one of either the plate or the support which are designed for interfering with projections and/or cavities fixed to the other.

In this way, the locking of the runner is obtained by force and guarantee a good grip of the runner on the support.

Preferably, the system comprises a grip tab designed for controlling the passage of the runner from the first operating condition to the second operating condition and vice versa.

According to another aspect, this invention relates to a method for fixing a groove-shaped crosspiece to at least one gap of a piece of furniture, comprising:
- constraining a support to a part of the piece of furniture and close to the at least one gap;
- drawing the crosspiece near the at least one gap;
- engaging a runner with a guide of the crosspiece;
- translating the runner along the guide until it reaches the support;
- forcing the locking of the runner to the support,
wherein the runner is engaged in the guide by inserting a bracket of the runner in an opening of the guide, the insertion being along a direction orthogonal to the direction of extension of the guide, and subsequently rotating the bracket in such a way that it is positioned in such a way that it is prevented from exiting the opening and it is allowed to slide in the guide. Preferably, the rotation is achieved by operating a grip tab fixed to the runner.

This method allows one or more runners to be inserted in the guide of a crosspiece, once the crosspiece has already been positioned on one or more gaps of the piece of furniture.

The runner may be inserted when each portion of the crosspiece between two walls is under the visual control of the assembly technician, who, if a mistake is made, must simply move the runner from one portion of the crosspiece to the other, or add another, or remove it.

The features of this invention are described in detail below provided by way of a non-limiting example of the more general concepts claimed.

The detailed description which follows relates to the accompanying drawings, in which:
- Figures 1a to 1d refer to the sequence of operations relating to a possible process for locking the crosspiece by a system according to the preferred embodiment of this invention;
- Figure 2 relates to a possible configuration wherein the preferred embodiment of this invention could be used;
- Figure 2a is a side view of the configuration of Figure 2;
- Figure 3 shows the construction details of a runner according to the preferred embodiment of this invention.

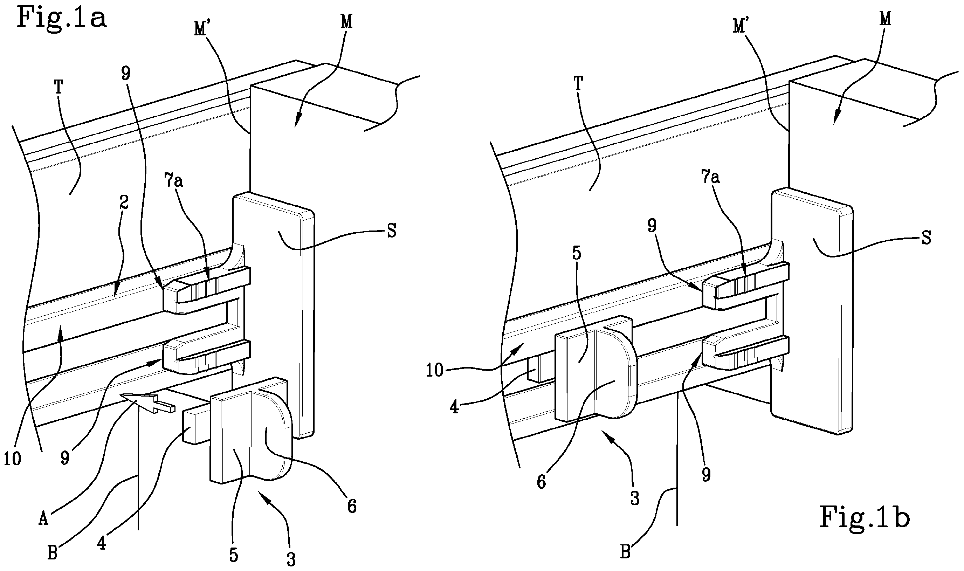

Figures 1a - 1d illustrate a system 1 for fixing at least one groove-shaped crosspiece T to at least one gap M of a piece of furniture M. The system 1 acts thanks to the forced coupling between at least between a support S designed to be constrained to the piece of furniture M, and a runner 3 which is designed to engage in a guide 2 fixed to the crosspiece T.

The guide 2 is preferably a socket having longitudinal extension made behind the crosspiece T. This socket has an internal area extending along a direction perpendicular to the longitudinal extension ('T' section of the internal area).

Preferably, the guide 2 extends between two opposite ends at which the inner area communicates entirely with the outside.

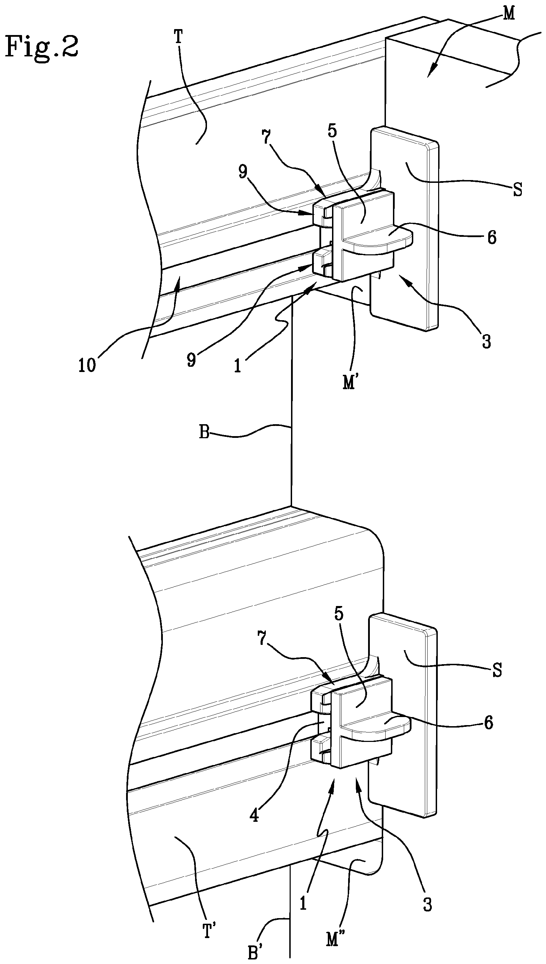

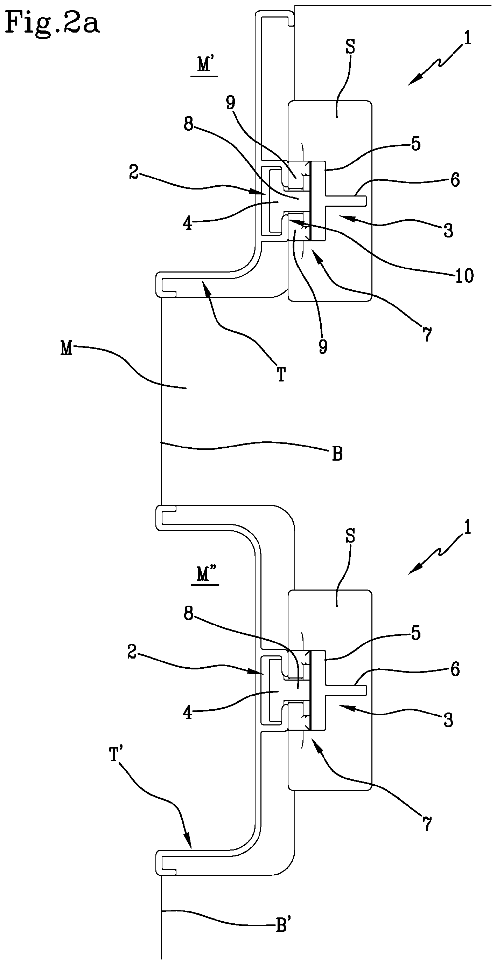

The runner 3 comprises a bracket 4 and preferably also a locking plate 5. The system 1 advantageously comprises coupling means 7, indicated in their entirety in Figure 2, between the runner 3 and the support S.

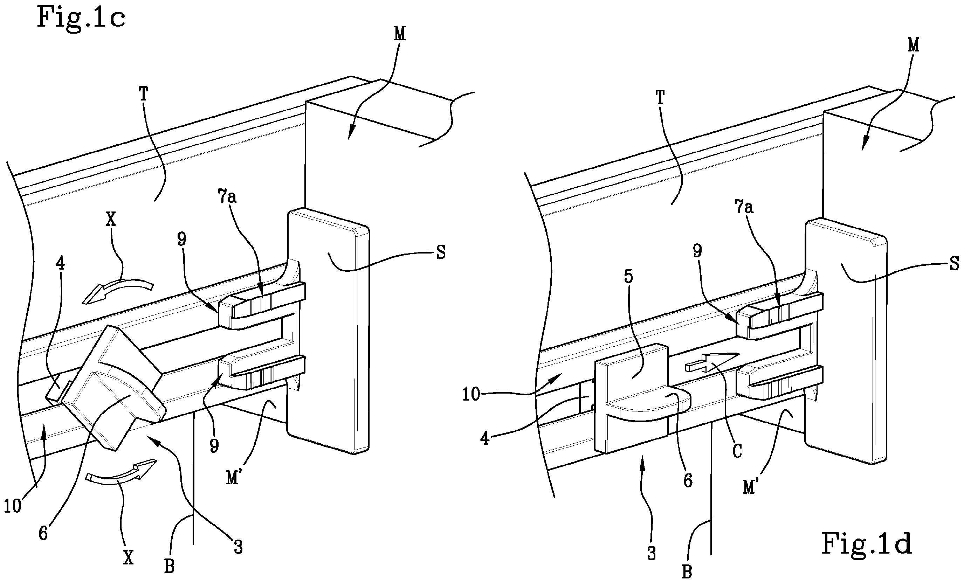

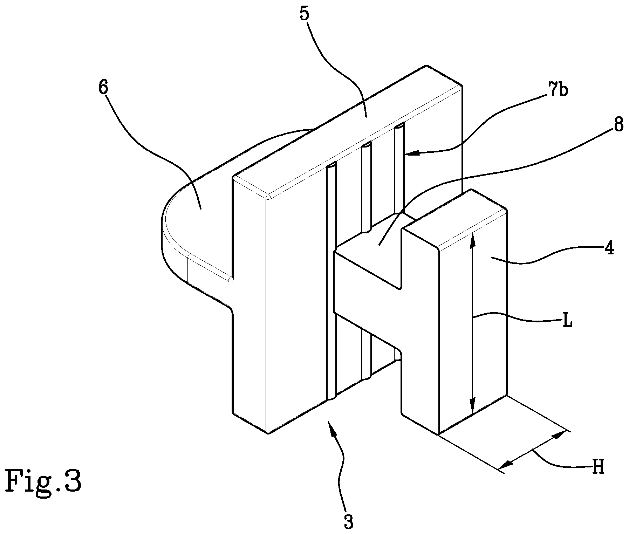

The coupling means 7 comprise, preferably, with reference in particular to Figures 1d and 3, projections and/or cavities 7a or 7b fixed to one of the plate 5 and support S, which are designed for interfering with projections and/or cavities 7b or 7a fixed to the other.

As can be seen in Figure 3, the supporting element 8 is fixed on one side to the bracket 4 and on the other side to a locking plate 5, designed for locking to the support S by means of the projections and/or cavities 7b. Moreover, the space between the bracket 4 and the plate 5 is such that it receives at least part of the support S, as can be seen in Figure 2.

In other words, the supporting element 8 spaces the bracket 4 from the plate 5.

The bracket 4 has a longitudinal extension H designed to allow, in a first operating condition of the runner 3, the bracket 4 to enter in the guide 2 (according to the direction A in Figure 1a) or escape from the guide 2 in the direction at a right angle to a direction of extension of the guide 2. In other words, the longitudinal extension H of the bracket 4 is equal to or less than the width of the guide 2 measured perpendicularly to the direction of longitudinal extension.

In Figure 1a the runner 3 is outside the guide 2, whilst in Figure 1b it is inserted in the guide 2 and in the first operating condition.

The bracket 4, again with reference also to Figure 3, has a transversal L-shaped extension designed, in a second operating condition of the runner 3, to allow the sliding of the bracket 4 in the guide and to prevent the escape of the bracket 4 from the guide 2. In other words, the transversal extension L of the bracket 4 is greater than the width of the guide 2 measured perpendicularly to the direction of longitudinal extension.

In Figure 1d the runner 3 is in the second operating condition and can therefore slide forwards and backwards along the direction of the arrow C, which is substantially parallel to the direction of extension of the guide 2.

It should be noted that the bracket 4 is elongate in shape along the direction of transversal extension L.

Preferably, the bracket 4 is fixed to a supporting element 5 which has a size and shape such that it allows the passage of the runner 3 from the first to the second operating condition and vice versa, when the bracket 4 is in the guide 2. The passage from the first to the second operating condition configuration and vice versa is accomplished, preferably, as shown by the arrows X of Figure 1c, by means of a rotation of the bracket 4 in the guide 2. More specifically, the rotation occurs about an axis at a right angle to an axis of extension of the guide 2, practically parallel to the arrow C of Figure 1d.

According to this invention, the support S comprises two raising elements 9 defining a sort of 'fork' positioned in use parallel to the guide 2 to the side of the opening (one element is positioned on one side and the other on the other side) and outside it on an operating wall 10 of the guide 2 (the wall having the opening facing the locking plate 5) so as to define an increase in the thickness with respect to the operating wall 10 of the guide for locking the runner 3 in position when the latter is in the second operating condition. In effect, the raising elements 9 together with the operating wall 10 of the guide define a thickness equal to or greater than (preferably greater than) the distance between the bracket 4 and the plate 5. In that way, by moving the plate 5 on the raising element 9, the runner 3 is locked in position (it is no longer possible to slide it in the guide) as it is locked on one side by the bracket 4 which pushes against the operating wall 10 from the inside and on the other side by the plate 5 which pushes on the raising elements 9.

It should be noted that the raising elements 9 define a part of the support S which is placed alongside the transversal member T for fixing it to the gap M' of the piece of furniture M (another part of the support S is, on the other hand, fixed to the piece of furniture M). More specifically, the raising elements 9 extend parallel to the guide 2.

In this embodiment, the system 1 comprises a grip tab 6 designed for controlling the passage of the runner 3 from the first operating condition to the second operating condition and vice versa, as shown in Figure 1c.

A possible method for fixing a groove-shaped crosspiece to at least one gap of a piece of furniture, using the system according to the embodiment illustrated in the drawings, comprises:
- constraining a support S to a part of the piece of furniture M and close to the at least one gap M';
- drawing the crosspiece T near the at least one gap M';
- engaging a runner 3 with a guide 2 of the crosspiece T;
- translating the runner 3 along the guide 2 until it reaches the support S;
- forcing the locking of the runner 3 to the support S.

The runner 3 is engaged in the guide 2 by inserting a bracket 4 of the runner 3 in an opening of the guide 2 and along a direction orthogonal to the direction of extension of the guide 2 (in the direction A of Figure 1a), and subsequently rotating the bracket 4. This rotation is such that the bracket 4 is positioned in such a way that the guide 2 prevents the escape of the bracket 4 from the opening of the guide 2, and in such a way as to guide the sliding along the direction of extension of the guide 2.

Preferably, the rotation is achieved by operating a grip tab 4 fixed to the runner 3.

Figure 2 shows a second crosspiece T' which is designed to cover a gap M" adjacent, for example, to two doors, one above and one below.

The system 1 for fixing the crosspiece T' is similar to that of the upper gap M', to which Figures 1a to 1d refer.

Figure 2a shows two gaps M' and M", which serve to open the ledges adjacent, respectively, to the edge B and to edge B' below it.

The drawing shows, for each of the two fixing systems 1, the bracket 4 inserted in the guide 2, and the locking plate 5 adjacent, at the coupling means 7, to the support S.

This invention fulfils the preset aims.

More specifically, this invention provides a fixing system which is more flexible than prior art systems, allowing the runner to be assembled even after the crosspiece is already positioned in the gap. In effect, according to this invention, the bracket of the runner has a longitudinal extension less than the opening of the guide and a transversal extension greater than the internal height of the guide. In this way it is possible to insert the runner in the groove at any point (without having to slide from one end of the crosspiece) and it is possible to fix it to the support by rotating it.

Advantageously, this invention facilitates the operations for fixing the crosspiece to pieces of furniture since:
- the assembly technician does not need to worry about firstly positioning the correct number of runners since they can be added later;
- it is no longer necessary, if it necessary to replace a runner or add a new one, to remove the crosspiece, which would result in the possibility of damaging the crosspiece;
- the runner adapts to the crosspieces currently used on the market without the need for structurally modifying the latter.

Lastly, it should be noted that this invention can also be used in combination with prior art type runners.

## Claims

1. A system (1) for fixing at least one groove-shaped crosspiece (T) to at least one gap (M') of a piece of furniture (M) by forced coupling, comprising:
- a crosspiece (T) having a guide (2) with an opening in its extension direction and at least one support (S) constrained in use to the piece of furniture (M);
- a runner (3) slidable in the guide (2) and comprising a bracket (4) and a supporting element (8) fixed on one side to the bracket (4) and on the other side to a locking plate (5) of the runner (3); the bracket (4) having a longitudinal extension (H) less than the width of an opening of the guide (2) in such a way as to enter in the guide through the opening defining a first operating condition of the runner (3); the bracket (4) having a relative transversal extension (L) greater than the width of the opening of the guide (2) in such a way that by rotating the runner (3) about itself starting from the first operating condition it changes to a second operating condition wherein the escape of the bracket (4) from the guide (2) is prevented; the supporting element (8) having a longitudinal and transversal width smaller than the width of the opening of the guide (2) in such a way as to allow the rotation of the runner (3) from the first operating condition to the second operating condition;
**characterised in that** the support (S) comprises at least a raising element (9) positioned on the guide (2) adjacent the opening and on an operating wall (10) of the guide (2) facing the locking plate (5) so as to define an increase in the thickness with respect to the operating wall (10) of the guide for forced coupling of the raised element (9) between the runner (3) and the guide (2) when the runner (3) is in the second operating condition.

2. The system (1) according to claim 1, wherein the raising element has a thickness equal to or greater than the distance between the plate (5) and the bracket (4) from which the thickness of the operating wall (10) of the guide must be subtracted.

3. The system (1) according to claim 2, wherein the passage occurs by means of a rotation of the bracket (4) in the guide (2) and about an axis orthogonal to an axis of extension of the guide (2).

4. The system (1) according to claim 2 or 3, wherein the support (S) comprises a first portion connected to the piece of furniture (M) and a second portion alongside which, in use, the crosspiece (T) placed.

5. The system (1) according to claim 4 **characterised in that** the second portion is defined by the raising element (9) which extends along the direction of extension of the guide (2) for a predetermined distance.

6. The system (1) according to any one of the preceding claims **characterised in that** the support (S) comprises two raising elements (9) in use positioned along the guide (2) at the sides of the opening and outside it on the operating wall (10) of the guide (2).

7. The system (1) according to any one of the preceding claims, comprising coupling means (7) between the runner (3) and the support (S).

8. The system (1) according to any one of claims 4 and 6, wherein the coupling means (7) comprise projections and/or cavities (7a) integral with one or both the plates (5) and the raising elements (9) in such a way as to interfere with the plate (5) and/or with the raising elements (9).

9. The system (1) according to any one of the preceding claims, comprising a grip tab (6) designed for controlling the passage of the runner (3) from the first operating condition to the second operating condition and vice versa.

10. A method for fixing a groove-shaped crosspiece (T) having a guide (2) with an opening in its extension direction according to the system of claim 1, to at least one gap (M') of a piece of furniture (M), comprising:
- constraining a support (S) to a part of the piece of furniture (M) and close to the at least one gap (M');
- drawing the crosspiece (T) near the at least one gap (M');
- engaging the runner (3) slidable in the guide (2) with the guide (2) of the crosspiece (T) by inserting the bracket (4) of the runner (3) in the opening of the guide (2) and along a direction orthogonal to the direction of extension of the guide (2), and subsequently rotating the bracket (4) in such a way that it is positioned in such a way that it is prevented from exiting the guide (2) and it is allowed to slide in a guided fashion in the guide (2);
- translating the runner (3) along the guide (2) until it reaches the support (S);
**characterised in that** it comprises a step of forcing the locking of the runner (3) to the support (S), making the runner slide until arriving on a raising element (9) positioned on the guide (2) adjacent the opening on an operating wall (10) of the guide (2) facing a locking plate (5) of the runner (3) outside the guide (2) in such a way as to define an increase in the thickness with respect to the operating wall (10) of the guide (2) for forced coupling of the raised element (9) between the runner (3) and the guide (2) when the bracket (4) of the runner (3) is rotated.

11. The method according to claim 10, wherein the rotation is achieved by operating a grip tab (6) fixed to the runner (3).

## Patentansprüche

1. System (1) zur Befestigung von mindestens einem rillenförmigen Querstück (T) an mindestens einem Spalt (M') eines Möbelstücks (M) durch Zwangskopplung, umfassend:
- ein Querstück (T), aufweisend eine Führung (2) mit einer Öffnung in seiner Ausdehnungsrichtung und mindestens eine Halterung (S), die in Verwendung mit dem Möbelstück (M) verbunden ist;
- einen Läufer (3), der in der Führung (2) gleitbar ist und einen Bügel (4) und ein Halterungselement (8) umfasst, fixiert an einer Seite am Bügel (4) und an der anderen Seite an einer Festspannplatte (5) des Läufers (3), wobei der Bügel (4) eine Längsausdehnung (H) aufweist, die geringer ist als die Breite einer Öffnung der Führung (2), sodass er durch die Öffnung in die Führung eintritt, definierend einen ersten Betriebszustand des Läufers (3), wobei der Bügel (4) eine relative Querausdehnung (L) aufweist, die größer ist als die Breite der Öffnung der Führung (2), sodass der Läufer (3), wenn er ausgehend vom ersten Betriebszustand um sich selbst gedreht wird, in einen zweiten Betriebszustand wechselt, wobei das Heraustreten des Bügels (4) aus der Führung (2) verhindert wird, wobei das Halterungselement (8) eine Längs- und Querbreite aufweist, die kleiner sind als die Breite der Öffnung der Führung (2), sodass die Drehung des Läufers (3) vom ersten Betriebszustand in den zweiten Betriebszustand erlaubt wird,
**dadurch gekennzeichnet, dass** die Halterung (S) mindestens ein Erhöhungselement (9) umfasst, das auf der Führung (2) angrenzend an die Öffnung und auf einer Betriebswand (10) der Führung (2) positioniert ist, der Festspannplatte (5) zugewandt, sodass eine Erhöhung der Dicke im Vergleich zur Betriebswand (10) der Führung für das Druckkuppeln des erhöhten Elements (9) zwischen dem Läufer (3) und der Führung (2) definiert wird, wenn sich der Läufer (3) im zweiten Betriebszustand befindet.

2. System (1) nach Anspruch 1, wobei das Erhöhungselement eine Dicke aufweist, die größer oder gleich dem Abstand zwischen der Platte (5) und dem Bügel (4) ist, von der die Dicke der Betriebswand (10) der Führung abgezogen werden muss.

3. System (1) nach Anspruch 2, wobei der Wechsel mittels einer Drehung des Bügels (4) in der Führung (2) und um eine Achse erfolgt, die rechtwinklig zu einer Ausdehnungsachse (2) der Führung angeordnet ist.

4. System (1) nach Anspruch 2 oder 3, wobei die Halterung (S) einen ersten Abschnitt umfasst, am Möbelstück (M) angeschlossen ist, und einen zweiten Abschnitt, neben dem das Querstück (T) in Verwendung positioniert ist.

5. System (1) nach Anspruch 4, **dadurch gekennzeichnet, dass** der zweite Abschnitt durch das Erhöhungselement (9) definiert ist, das sich entlang der Ausdehnungsrichtung (2) der Führung um eine vorgegebene Entfernung erstreckt.

6. System (1) nach einem der vorhergehenden Ansprüche, **dadurch gekennzeichnet, dass** die Halterung (S) zwei Erhöhungselemente (9) umfasst, die in Verwendung entlang der Führung (2) an den Seiten der Öffnung und außerhalb dieser an der Betriebswand (10) der Führung (2) positioniert sind.

7. System (1) nach einem der vorhergehenden Ansprüche, umfassend Kupplungsmittel (7) zwischen dem Läufer (3) und der Halterung (S).

8. System (1) nach einem der Ansprüche 4 und 6, wobei die Kupplungsmittel (7) Vorsprünge und/oder Hohlräume (7a) umfassen, die fest mit den Platten (5) und/oder den Erhöhungselementen (9) verbunden sind, sodass sie mit der Platte (5) und/oder mit den Erhöhungselementen (9) interferieren.

9. System (1) nach einem der vorhergehenden Ansprüche, umfassend eine Grifflasche (6), die ausgestaltet ist, um den Wechsel des Läufers (3) vom ersten Betriebszustand in den zweiten Betriebszustand und umgekehrt zu steuern.

10. Verfahren zur Befestigung eines rillenförmigen Querstücks (T), aufweisend eine Führung (2) mit einer Öffnung in seiner Ausdehnungsrichtung nach dem System aus Anspruch 1 an mindestens einem Spalt (M') eines Möbelstücks (M), umfassend:
- Verbinden einer Halterung (S) mit einem Teil des Möbelstücks (M) und nahe an dem mindestens einen Spalt (M');
- Ziehen des Querstücks (T) in die Nähe des mindestens einen Spalts (M');
- Eingreifen des in der Führung (2) gleitbaren Läufers (3) in die Führung (2) des Querstücks (T), indem der Bügel (4) des Läufers (3) in die Öffnung der Führung (2) und entlang einer Richtung, die rechtwinklig zur Ausdehnungsrichtung der Führung (2) angeordnet ist, eingefügt wird und anschließend der Bügel (4) so gedreht wird, dass er so positioniert wird, dass sein Austreten aus der Führung (2) vermieden wird und er auf geführte Art und Weise in der Führung (2) gleiten kann;
- Verschieben des Läufers (3) entlang der Führung (2), bis dieser die Halterung (S) erreicht,
**dadurch gekennzeichnet, dass** es einen Schritt zum Forcieren des Festspannens des Läufers (3) an der Halterung (S) umfasst, indem der Läufer verschoben wird, bis er an einem Erhöhungselement (9) angelangt, das auf der Führung (2) angrenzend an die Öffnung an einer Betriebswand (10) der Führung (2), die einer Festspannplatte (5) des Läufers (3) außerhalb der Führung (2) zugewandt ist, positioniert ist, sodass eine Erhöhung der Dicke im Vergleich zur Betriebswand (10) der Führung (2) für das Druckkuppeln des erhöhten Elements (9) zwischen dem Läufer (3) und der Führung (2) definiert wird, wenn der Bügel (4) des Läufers (3) gedreht wird.

11. Verfahren nach Anspruch 10, wobei die Drehung durch die Betätigung einer Grifflasche (6) erhalten wird, die am Läufer (3) fixiert ist.

## Revendications

1. Système (1) pour fixer au moins une traverse (T) rainurée à au moins une fente (M') d'un meuble (M) par accouplement forcé, comprenant :
- une traverse (T) comportant un guide (2) avec une ouverture dans sa direction d'extension et au moins un support (S) contraint à l'usage au meuble (M) ;
- une glissière (3) pouvant coulisser dans le guide (2) et comprenant une étrier (4) et un élément de support (8) fixé d'un côté à l'étrier (4) et de l'autre côté à une plaque de verrouillage (5) de la glissière (3); l'étrier (4) ayant une extension longitudinale (H) inférieure à la largeur d'une ouverture du guide (2) de manière à pénétrer dans le guide à travers l'ouverture définissant une première condition de fonctionnement de la glissière (3); l'étrier (4) ayant une extension transversale relative (L) supérieure à la largeur de l'ouverture du guide (2) de manière qu'en tournant la glissière (3) sur elle-même à partir de la première condition de fonctionnement, elle passe à une deuxième condition de fonctionnement dans laquelle la fuite de l'étrier (4) du guide (2) est empêché; l'élément de support (8) ayant une largeur longitudinale et transversale inférieure à la largeur de l'ouverture du guide (2) de manière à permettre la rotation de la glissière (3) de la première condition de fonctionnement à la deuxième condition de fonctionnement ;
**caractérisé en ce que** le support (S) comprend au moins un élément de relèvement (9) positionné sur le guide (2) adjacent à l'ouverture et sur une paroi de fonctionnement (10) du guide (2) en faisant face à la plaque de verrouillage (5) pour définir une augmentation de l'épaisseur par rapport à la paroi de fonctionnement (10) du guide pour le couplage forcé de l'élément surélevé (9) entre la glissière (3) et le guide (2) lorsque la glissière (3) est dans le deuxième condition de fonctionnement.

2. Système (1) selon la revendication 1, dans lequel l'élément de relèvement a une épaisseur égale ou supérieure à la distance entre la plaque (5) et l'étrier (4) à partir duquel l'épaisseur de la paroi de fonctionnement (10) du guide doit être soustraite.

3. Système (1) selon la revendication 2, dans lequel le passage se produit au moyen d'une rotation de l'étrier (4) dans le guide (2) et autour d'un axe orthogonal à un axe d'extension du guide (2).

4. Système (1) selon la revendication 2 ou 3, dans lequel le support (S) comprend une première partie reliée au meuble (M) et une deuxième partie le long de laquelle, dans l'usage, la traverse (T) est placée.

5. Système (1) selon la revendication 4, **caractérisé en ce que** la deuxième partie est définie par l'élément de relèvement (9) qui s'étend le long de la direction d'extension du guide (2) sur une distance prédéterminée.

6. Système (1) selon l'une quelconque des revendications précédentes **caractérisé en ce que** le support (S) comprend deux éléments de relèvement (9) en usage positionnés le long du guide (2) sur les côtés de l'ouverture et à l'extérieur sur la paroi de fonctionnement (10) du guide (2).

7. Système (1) selon l'une quelconque des revendications précédentes, comprenant des moyens de couplage (7) entre la glissière (3) et le support (S).

8. Système (1) selon l'une quelconque des revendications 4 et 6, dans lequel les moyens de couplage (7) comprennent des saillies et/ou des cavités (7a) solidaires d'une ou des deux plaques (5) et des éléments de relèvement (9) de manière à interférer avec la plaque (5) et/ou avec les éléments de relèvement (9) .

9. Système (1) selon l'une quelconque des revendications précédentes, comprenant une patte de préhension (6) conçue pour commander le passage de la glissière (3) de la première condition de fonctionnement à la deuxième condition de fonctionnement et vice versa.

10. Procédé de fixation d'une traverse (T) rainurée comportant un guide (2) avec une ouverture dans sa direction d'extension selon le système de la revendication 1, à au moins un passage (M') d'un meuble (M) comprenant :
- contraindre un support (S) à un meuble (M) et proche de au moins un passage (M') ;
- tirer la traverse (T) à proximité du au moins un passage (M') ;
- engager la glissière (3) coulissant dans le guide (2) avec le guide (2) de la traverse (T) en insérant l'étrier (4) de la glissière (3) dans l'ouverture du guide (2) et le long une direction orthogonale à la direction d'extension du guide (2), et ensuite tourner l'étrier (4) de manière à ce qu'elle soit positionnée de manière qu'elle ne puisse pas sortir du guide (2) et qu'elle lui soit permis de coulisser de manière guidée dans le guide (2) ;
- déplacer par translation la glissière (3) le long du guide (2) jusqu'à ce qu'elle atteigne le support (S) ; **caractérisé en ce qu'**elle comprend une étape consistant à forcer le verrouillage de la glissière (3) au support (S), faisant coulisser la glissière jusqu'à arriver sur un élément de relèvement (9) positionné sur le guide (2) adjacent à l'ouverture sur une paroi de fonctionnement (10) du guide (2) faisant face à une plaque de verrouillage (5) de la glissière (3) à l'extérieur du guide (2) de manière à définir une augmentation de l'épaisseur par rapport à la paroi de fonctionnement (10) du guide (2) pour le couplage forcé de l'élément surélevé (9) entre la glissière (3) et le guide (2) lorsque l'étrier (4) de la glissière (3) est tournée.

11. Procédé selon la revendication 10, dans lequel la rotation est atteinte en actionnant une patte de préhension (6) fixée à la glissière (3).
